# EUROPEAN PATENT APPLICATION

(11) **EP 2 098 137 A1**
(43) Date of publication of application: **09.09.2009**
(21) Application number: 08152192.4
(22) Date of filing: 03.03.2008
(51) Int. Cl.: A47B 21/04

(54) **Computer holder**

(71) Applicant: Zirkona Sweden AB, 904 22 Umeå (SE)
(72) Inventor: Persson, Martin, 904 33, UMEÅ (SE)
(74) Representative: Loqvist, Gabriel Mathias

(57) **Abstract**

This invention relates to a computer holder (1) for a vehicle comprising a wall attachment member (3), a telescopic arm (5), which is pivotably connected, at one end thereof, with the attachment member, an elongated link member (7), which is pivotably connected, at one end thereof, to the other end of the telescopic arm, and a computer support member (9), which is connected with the other end of the link member. Thus, the position of the computer support member is adjustable both by extracting/retracting the telescopic arm and by pivoting the link member.

## Description

### Technical field

This invention relates to a computer holder for a vehicle, i.e. a holder that is used for holding a computer in a vehicle.

### Technical background

A driver, or a passenger, often uses some kind of computer, either as a working tool or as a personal tool. In a typical vehicle, such as a car, a van or a truck, there is no place to put the computer in order to use it comfortably. Therefore, efforts have been made to construct a useful computer holder that can be mounted in a vehicle. For example, Jotto desk markets computer mounts, as they call it, which are stands that are arranged to be mounted at the base of the passenger seat and has a computer support plate, which can be removed when not used. In fact it has to be removed in order not to be an obstacle to either the driver or the adjacent passenger.

### Summary of the invention

The object of this invention is to provide a computer holder for a vehicle, which computer holder is easy to move between an operation position where the driver can use the computer comfortably, and a resting position where it is out of the way.

The object is achieved by a computer holder according to claim 1 of the appended claims.

Thus, according to the present invention there is provided a computer holder for a vehicle comprising a wall attachment member, a telescopic arm, which is pivotably connected, at one end thereof, with the attachment member, an elongated link member, which is pivotably connected, at one end thereof, to the other end of the telescopic arm, and an computer support member, which is connected with the other end of the link member.

The telescopic arm, which is pivotably connected with the attachment member enables a remote mounting by being telescopic, i.e. variable in length, and an ability to fold it away when not needed, due to the pivotable connection. In particular the driver computer holder is applicable to a car or a truck, or the like which has a rear wall closely behind the front seats. In addition the elongated link member adds a degree of freedom for a good positioning of the computer support member. It should be noted that the term "computer" should be widely interpreted as including any portable electronic equipment having computational capability, which is useful for the driver.

In accordance with an embodiment of the holder, said telescopic arm is pivotable in a vertical plane, and said link member is pivotable in a horizontal plane. The planes are related to a position that the holder is meant to have when mounted in a vehicle. Thus, for instance these features provide for mounting the holder just behind yet between the front seats, such that the holder can be retracted and raised to a resting position, where it is out of the way and lowered and extracted to an operation position where it is laterally pivotable into a comfortable position.

In accordance with an embodiment of the holder, the attachment member additionally has an arm connection portion where said telescopic arm is pivotably connected, and an arm stopper, which is arranged at the end of an elongate protrusion element protruding from said arm connection portion, and stopping the movement of the telescopic arm when pivoted from a operation position to a resting position.

In accordance with an embodiment of the holder the computer support is rotatably connected with the link member. This provides for an additional positioning capability in the operation position.

Further objects and advantages of the present invention will be discussed below by means of exemplary embodiments.

### Brief description of the drawings

Exemplifying embodiments of the invention will be described below with reference to the accompanying drawings, in which:
Fig. 1 is a schematic perspective view of an embodiment of a computer holder according to the present invention;
Figs. 2a and 2b are schematic side views of the computer holder of fig. 1; and

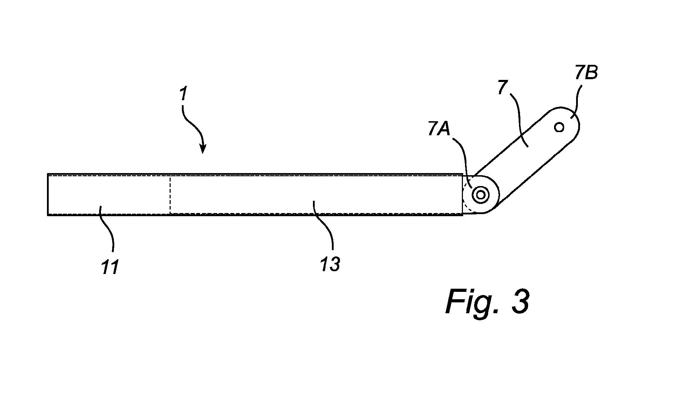

Fig. 3 is a schematic top view of a part of the computer holder shown in Fig. 1.

### Description of embodiments

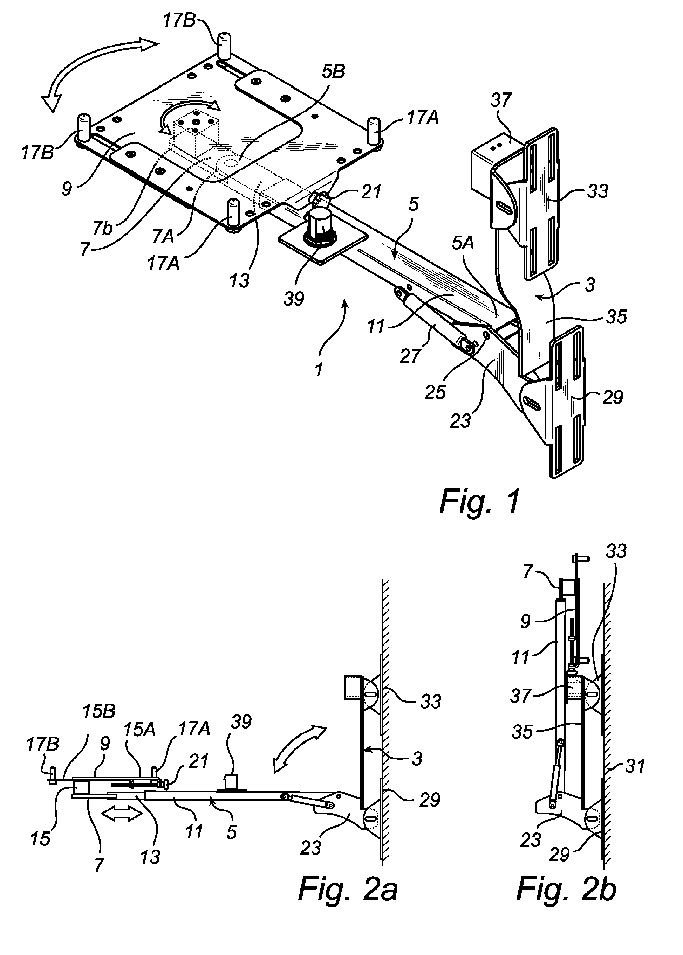

According to an embodiment of the computer holder 1, as illustrated in the figures, it comprises a wall attachment member 3, a telescopic arm 5, which is pivotably connected, at one end, which is a proximal end, 5A thereof, with the attachment member 3, an elongated link member 7, which is pivotably connected, at one end thereof 7A, to the other end, i.e. distal end, 5B of the telescopic arm, and an computer support member 9, which is connected with the other end 7B of the link member 7. The telescopic arm 5 is pivotably connected with the attachment member 3, such that, at a normal mounting, the telescopic arm 5 is pivotable in a vertical plane between an operation position, or unfolded position, where it extends horizontally, as shown in Fig. 2a, and a rest position, or folded position, where it extends vertically, as shown in Fig. 2b. The telescopic arm 5 comprises a tubular outer part 11, which is connected with the attachment member 3, and a tubular inner part 13, extending within the outer part 11, and being extractable and retractable relative to the outer part 11. The outer and inner parts 11, 13 each have a rectangular cross section.

The link member 7 is pivotably connected with said inner part 13, and is laterally pivotable in the operation position. Thereby the user of the computer that is arranged on the computer support member 9 will be able to angle the computer towards him/her to get it closer to the centre line of the body in order to increase the comfort.

It should be noted that the mutual sizes, e.g. lengths, of the different parts of the computer holder are not determinable from the drawing, which is most schematic.

The computer support member 9 is rotatably connected with the link member 7 via a rotational bearing15, and comprises two support plates 15A, 15B, which are telescopingly interconnected. Thus, the user is able to rotate the computer support member 9 to an advantageous angular position in order to increase the comfort. The support plates 15A, 15B are provided with protruding computer lockers 17A, 17B. By means of an adjustment element 21, e.g. a screw, the support plates 15A, 15B are pushed together in order to clamp a computer between the computer lockers 17A, 17B.

The attachment member 3 comprises a connection bracket 23, which provides said pivotable connection with the telescopic arm 5 by means of a simple connection bolt 25. In the operation position a portion of a bottom surface of the telescopic arm 5 rests on a support edge of the bracket 23. A piston-cylinder device 27 is attached at one end to the outer part 11 of the telescopic arm 5, and at the other end to the bracket 23. The piston-cylinder device 27 dampens the movement when unfolding, or folding down, the computer holder 1 to the operation position, and helps in raising it, or folding it up, to the rest position. The attachment member 3 further comprises a lower attachment plate 29, provided with through holes for attachment to a wall 31, an upper attachment plate 33, provided with similar holes, and an elongate interconnection plate 35 extending between and interconnecting the attachment plates 29, 33. Further the attachment member 3 comprises a retainment member 37, which retains the telescopic arm in the vertical rest position. The telescopic arm, in turn, is provided with a corresponding engagement member 39, which is arranged on the outer part 11 and which engages with the retainment member 37 in the rest position to keep the arm 5 in place.

Typically, the computer holder 1 is mounted on an intermediate wall 31 in a vehicle, where the intermediate wall 31 is positioned just behind the two front seats, i.e. the driver seat and the adjacent passenger seat. When the driver wants to use his/her computer, typically a lap top, he/she grabs the telescopic arm 5 and pulls it down. Then the telescopic arm 5 is unfolded from the resting position, where it has been secured by the engagement between the engagement member 39 and the retainment member 37, to the operation position, where the telescopic arm 5 extends horizontally. In the operation position, the driver has many opportunities to adjust the position of the computer support member 9, as will now be explained.

The driver puts his/her computer on the computer support member 9 and clamps the computer by tightening the adjustment element 21 to push together the support plates 15A, 15B. Thereby the computer lockers 17A, 17B clamp the computer. The driver can turn the computer more in front of him/her, wherein the link member 7 pivots about its connection with the inner part 13 of the arm 5. The driver can set the distance between his/her body and the computer by extracting or retracting the telescopic arm 5. Further, the driver can rotate the computer into a favourable angle, due to the rotatable connection between the computer support member 9 and the link member 7. It should be noted that the computer holder is equally useable for a person sitting in the passenger seat.

Above an embodiment of the computer holder according to the present invention has been described. This should be seen as merely a non-limiting example. Many modifications will be possible within the scope of the invention as defined by the claims, as will be understood by a person skilled in the art. Below a few examples of modifications will be given.

Most of the parts of the computer holder can be modified as to the structure thereof, while retaining the same function. For instance, each one of the tubular parts of the arm can be provided as two parallel elongate plates interconnected by bolt-distance assemblies separating yet rigidly fixing the elongate plates relative to each other. The link member can be a single elongate plate. The telescopic arm can comprise three, or more, tubular parts if appropriate for some reason. There are many alternative ways to fix the telescopic arm in the different positions. The computer holder is mountable at any suitable support close to the seat where the user is to be seated. However, preferably, the support is at least substantially vertical and attached at a position that is behind and beside the seat.

## Claims

1. A computer holder for a vehicle comprising a wall attachment member (3), a telescopic arm (5), which is pivotably connected, at one end thereof, with the attachment member, an elongated link member (7), which is pivotably connected, at one end thereof, to the other end of the telescopic arm, and a computer support member (9), which is connected with the other end of the link member.

2. A computer holder according to claim 1, wherein, when the holder is mounted in a vehicle, said telescopic arm (5) is pivotable in a vertical plane, and said link member (7) is pivotable in a horizontal plane.

3. A computer holder according to claim 2, wherein said attachment member (3) has a arm connection portion (23) where said telescopic arm (5) is pivotably connected, and an arm stopper (37), which is arranged at the end of an elongate protrusion element (35) protruding from said arm connection portion, and stopping the movement of the telescopic arm when pivoted from an operation position to a resting position.

4. A computer holder according to any one of the preceding claims, wherein said computer support member (9) is rotatably connected with the link member (7).
